# EUROPEAN PATENT SPECIFICATION

(11) **EP 2 080 568 B1**
(45) Date of publication and mention of the grant of the patent: **22.12.2010**
(21) Application number: 08425022.4
(22) Date of filing: 17.01.2008
(51) Int. Cl.: B08B 15/00, F16K 1/22, B65H 75/44

(54) **A valve and an aspiration device comprising the valve**
Ventil und Absaugvorrichtung mit dem Ventil
Vanne et dispositif d'aspiration comprenant la vanne

(43) Date of publication of application: 22.07.2009
(73) Proprietor: Filcar S.p.A., 42100 Reggio Emilia (IT)
(72) Inventor: Baschieri, Elio, 42100 Reggio Emilia (IT)
(74) Representative: Gotra, Stefano

(56) References cited:
- WO-A-96/05001
- DE-A1- 10 135 503
- GB-A- 362 607

## Description

The invention relates to a valve, in particular an automatically-controlled valve commanded by the spatial configuration assumed by the valve itself. In other words, the valve of the invention is of a type which is not activated by a motor.

Prior art valve according to the preamble of claim 1 are known for instance from WO-A-9605001.

The present invention also relates to an aspiration device comprising the valve, and in particular a device of the type used in motor vehicle repair workshops for aspirating fumes and exhaust issuing from vehicles.

It is known that in motor vehicle repair workshops the automobiles are left with their engines running to analyse the exhaust fumes produced and to perform any repair operations and adjustments which require the engine to be left on. To avoid the fumes' spreading into the surrounding atmosphere, an aspiration device therefor is provided, which comprises an aspirator intake, generally arranged at a distance from the vehicle, and a flexible tube which at one end is connected to the aspirator and at the other end is removably connected by an operator to the exhaust pipe of the vehicle such as to aspirate the fumes produced by the vehicle. The tube is wound on a rotatable support, supported by a fixed or slidable structure, raised with respect to the workshop floor such that the tube can be wound on a central tubular portion of the rotatable support and unwound from the tubular portion itself according to a distance between the vehicle to be repaired and the rotatable support, such as not to constitute an obstacle for the operator. The central tubular portion defines to all effects a reel on which the flexible tube is wound and which is therefore rotatable about a longitudinal axis thereof.

For practical reasons and considering the numerous times the engine is started up and stopped during the repairing operations, the aspirator is left in operation while transmission of the suction to the tube is stopped. This is done by interposing a special butterfly valve in the central tubular portion and connecting the tubular portion itself at one end to the flexible tube and at the opposite end to the aspirator. The butterfly valve comprises a shutter which can occlude the passage of the aspiration upon the action of a rod which is rigidly connected to the shutter. The rod can rotate together with the shutter about a diametral axis (i.e. perpendicular to the longitudinal axis) of the central tubular portion so as to interrupt or enable passage of the aspiration. A counterweight is fixed to the rod in an eccentric position with respect to the diametral axis. During a rotation of the central tubular portion following a winding or unwinding of the flexible tube, the counterweight subjected to its own weight force causes the rod to rotate and the shutter to assume a closed position or an open position according to the angular position reached by the central tubular portion about the longitudinal axis thereof. In particular, following a rotation of the central tubular portion of half a revolution, the cam is on the opposite side to where it was before the rotation and this causes commutation of the shutter from the open position to the closed position, and vice versa.

This type of valve has the disadvantage that it does not enable a constant aspiration during an entire unwinding of the flexible tube from the rotatable support. The unwinding of the flexible tube (necessary for coupling an end thereof to the exhaust pipe of a vehicle) can require numerous revolutions of the rotatable support, and in particular the relative central tubular portion, with consequent continuous and successive commutations of the shutter between the open and closed positions, and vice versa, causing an intermittent aspiration.

Further, a valve of the above type requires the operator handling the flexible tube to effectively control that at the moment of coupling of the flexible tube of the vehicle the aspiration is transmitted and thus the shutter is open. Should this appear not to be true, the operator must necessarily rewind a tract of flexible tube on the rotatable support, or unwind a tract thereof, such that the central tubular portion rotates until it commutates the shutter into the open position. This depends on the operator's expertise; he or she must ascertain at all times that the aspiration is not interrupted, for example due to an unforeseen rotation, even of small entity, of the rotatable support.

The same circumstance obtains when the flexible tube is rewound on the rotatable support, since the flexible tube must be wound such that the aspiration is interrupted. A wrong reading of the situation, or even a small accidental winding or unwinding, might lead to the aspiration's being newly connected up to the flexible tube.

The technical task of the present invention is to provide a valve and an aspiration device comprising the valve, which are free of the above-cited drawbacks.

In the ambit of the technical aim, the objective of the invention is to provide a valve and an aspiration device comprising the valve which are simple and practical to use.

In particular the invention aims to provide a valve and an aspiration device comprising the valve, the use of which does not require high the operator to be particularly expert in order to use the invention.

A further aim of the invention is to provide a valve and an aspiration device for the valve which exhibit high operative flexibility.

The specified aims, and more besides, are substantially attained by a valve and an aspiration device comprising the valve, in agreement with what is set out in claims 1 and 10 and/or in one or more of the claims depending on the two cited claims.

A description will now be made of a preferred but not exclusive embodiment of a valve and an aspiration device comprising the valve, in agreement with the enclosed figures of the drawings, in which:
figure 1 is a lateral view of a plant in a motor vehicle repair workshop, comprising an aspiration device of the present invention;
figure 2 is a perspective view of the aspiration device of the present invention, incorporating a valve of the present invention;
figure 3 is a perspective view of a valve of the present invention in a first operating configuration thereof;
figure 4 is a perspective view of the valve of figure 3 in a second operating configuration thereof;
figures from 5A to 5D are perspective views of a first sequence of operating stages of the valve of figures 3 and 4;
figure 5E is a perspective view of the valve of figures 3 and 4 in the operating stage illustrated in figure 5D, with some parts removed better to evidence others;
figures from 6A to 6D are perspective views of a second sequence of operating stages of the valve of figures 3 and 4;
figures from 7A to 7D are perspective views of a third sequence of operating stages of the valve of figures 3 and 4;
figure 7E is a perspective view of the valve of figures 3 and 4 in the operating stage illustrated in figure 7D, with some parts removed better to evidence others;
figures from 8A to 8D are perspective views of a fourth sequence of operating stages of the valve of figures 3 and 4.

In the figures, 100 denotes in its entirety a plant of a motor vehicle repair workshop. The plant 100 can however be another type of plant, and in particular a general plant for verifying emissions of exhaust gases and in which it is necessary to prevent the exhaust gases from being issued into the atmosphere.

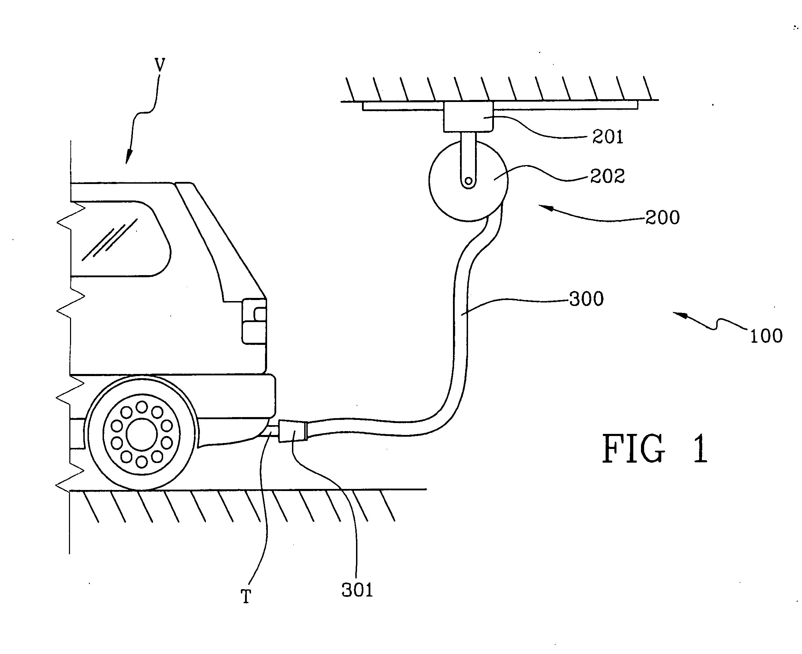

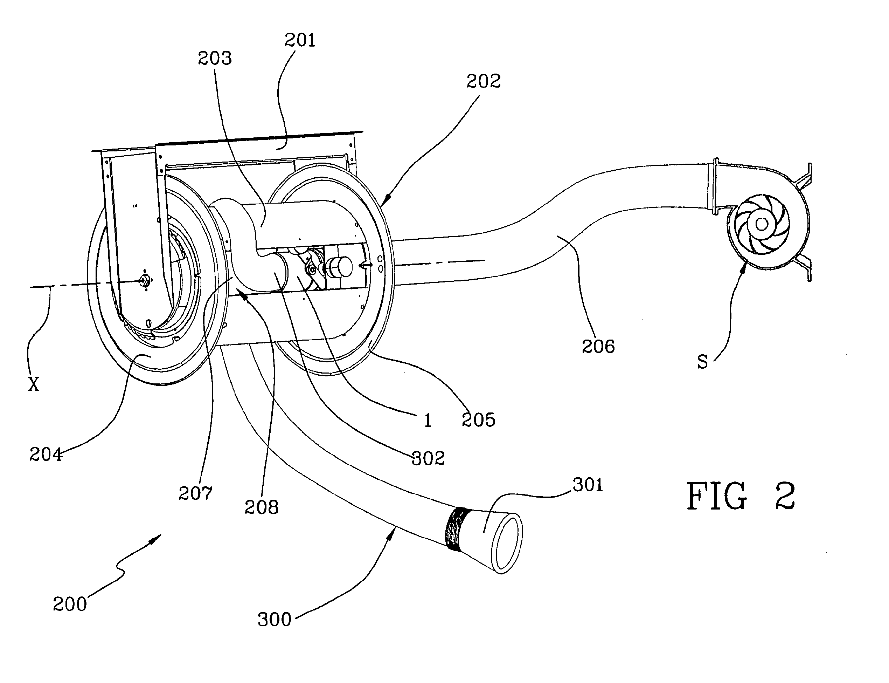

In the view of figure 1, the plant 100 comprises an aspiration device 200 equipped with a flexible tube 300 which, at an end 301 thereof, is connectable to an exhaust pipe T of a vehicle V, while at the other end 302 thereof (not illustrated in figure 1) it is placed in communication with a source S of aspiration, as shown in figure 2.

Figure 2 is a detailed illustrated of the aspiration device 200, which comprises a frame 201 anchorable to a fixed structure, for example a beam or a wall, and a rotatable support 202 hinged to the frame 201 in order to rotate about a hinge axis X which is preferably horizontal.

The frame 201 can, in a further embodiment which is not illustrated in the figures, be connected to a slidable structure.

The rotatably support 202 comprises a central tubular portion 203, on which the flexible tube can be wound, and two opposite lateral discs 204, 205 connected to one another through the central tubular portion 203. Each of the lateral discs 204, 205 is hinged to the frame 201 and define, together with the central tubular portion 203, a reel on which the flexible tube 300 can be wound. The rotatably support 202 preferably comprises a recall spring, acting on the central tubular portion 203 in order to keep the flexible tube 300 stretched and to cause it to wind automatically on the central tubular portion 203, such that the operator unwinds the flexible tube 300 by pulling it towards himself while the rewinding of the flexible tube 300 is automatic.

In the view of figure 2, the rotatable support 202 is directly connected to the aspiration source S by means of a supply tubing 206 which transmits the aspiration internally of the central tubular portion 203 through an opening (not illustrated) afforded in one of the two lateral discs 204, 205. In more detail, the central tubular portion 203 of the rotatably support 202 is internally hollow and defines internally thereof a chamber 207 which is in communication with the outside via a slit 208. The slit 208, which preferably extends parallel to the hinge axis X of the rotatable support 202, has the function of allowing the flexible tube 300 to pass, which tube 300 exhibits an end which is positioned internally of the chamber 207 in order to connect with the source of aspiration S via the opening of one of the two lateral discs 204, 205, while the remaining part of the flexible tube 300 exits the slit 208 in order to wind on the central tubular portion 203.

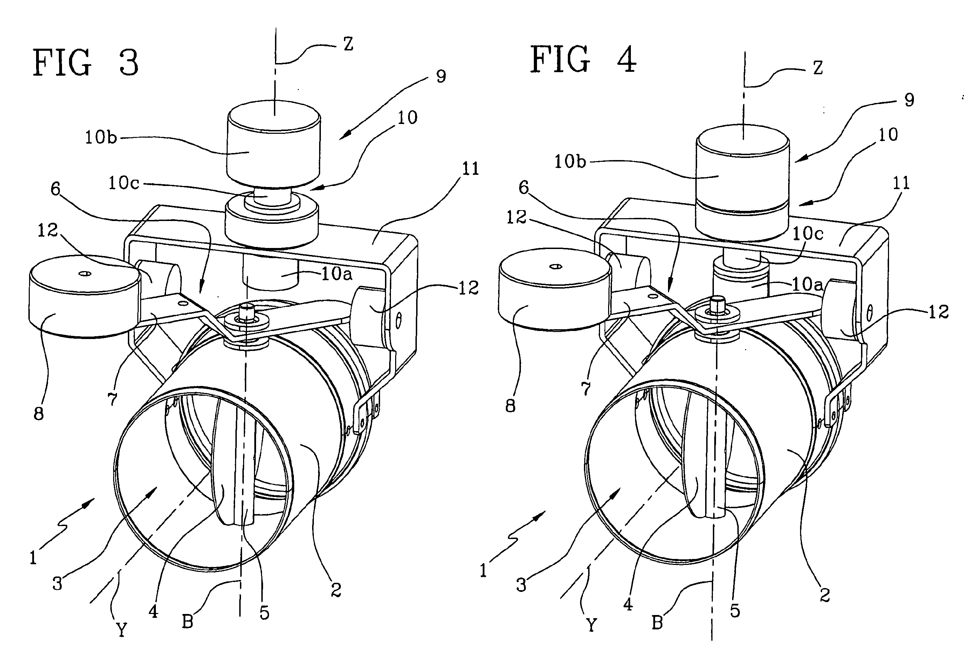

A valve according to the present invention is denoted in its entirety by 1 and is interposed between the flexible tube 300 and the aspiration source S. Preferably, as shown in figure 2, the valve 1 is arranged internally of the chamber 207 and is made solid to the central tubular portion 203 of the rotatable support 202 in order to be drawn in rotation together therewith. As better shown in figures 3 and 4, the valve 1 comprises a hollow body 2 which is substantially cylindrical, internally defining a conduit 3. The conduit 3 develops along a longitudinal axis Y of the hollow body 2 and extends between an inlet and an outlet of the hollow body 2. The inlet is connected to the aspiration source S, while the outlet is connected to an end of the flexible tube 300 such that the conduit 3 realises a hydraulic connection between the flexible tube 300 and the aspiration source S. In the illustrated embodiment, the conduit 3 has a circular section.

The valve 1 further comprises an obturator 4, active internally of the conduit 3 in order to interrupt passage of the aspiration through the conduit 3 or, more in general, in order to allow or block passage of air through the conduit 3. The obturator 4 is shutter-conformed and has an external shape which is substantially counter-shaped to the circular section of the conduit 3 such that the obturator can determine complete closure of the conduit 3. The obturator 4 is rotatably mobile with respect to the hollow body 2 in order to rotate about a tilting axis B between a closed position, in which it obstructs the conduit 3, and an open position in which it allows fluid passage through the conduit 3. The tilting axis B is perpendicular to the longitudinal axis Y of the conduit 3 and is oriented such that when the obturator 4 is in the closed position the obturator 4 is arranged in a lie that is perpendicular to the longitudinal axis Y of the conduit 3. More preferably, the tilting axis B is a diametral axis of the obturator 4, such that the obturator 4 has a balanced mass distribution with respect to the tilting axis B.

The obturator 4 is solidly constrained to a pivot 5 which develops along the tilting axis B and exits from the conduit 3 in order to allow a connection of the obturator 4 to the respective command organ 6. In the views of figures 3 and 4, the command organ 6 comprises an arm 7 which is solidly constrained to a portion of the pivot 5 which exits the conduit 3 in order to rotate together with the pivot 5 and the obturator 4 about the tilting axis B. The arm 7 is provided with a counterweight 8 which attributes the arm 7 with a mass arrangement which is eccentric with respect to the tilting axis B.

The obturator 4, the pivot 5 and the arm 7 thus constitute a single rigid body which is freely rotatable about the tilting axis B. By "freely rotatable" is meant the possibility of rotating about the tilting axis B without the use of an external motor but; on the contrary, freely and governed only by the inertia of the obturator 4, the pivot 5 and the arm 7.

The valve 1 advantageously further comprises means for retaining 9 which act on the arm 7 in order to allow and/or block the rotation of the arm 7 about the tilting axis B.

The means for retaining 9 are mounted on the hollow body 2 externally of the conduit 3 and comprise a translator 10 which is freely mobile towards and away from the hollow body 2. In this case too, "freely mobile" is intended to mean mobile without any help of external motors, but under the action of only the weight force of the translator 10.

The means for retaining 9 further comprise a support body 11 which is fixed to the hollow body 2 externally of the conduit 3 and on which the translator 10 is slidably mounted.

The translator 10 is mobile between an engaged position, in which it intercepts the arm 7, preventing it from rotating about the tilting axis B, and a disengaged position, in which it allows the arm 7 to rotate about the tilting axis B. In particular, in the engaged position the translator is neared to the hollow body 2 and interferes with a normal rotation movement of the arm 7, which is thus blocked in a stable position. In the disengaged position, on the contrary, the translator 10 is in the distanced position from the arm 7, which is thus free to rotate about the tilting axis B. In order to do this, the translator 10 comprises an engagement portion 10a destined to enter into contact with the arm 7 and preferably having a circular-section cylindrical external profile. The translator 10 further comprises a head 10b and a central stem 10c connecting the head 10b and the engagement portion 10a. The central stem 10c is slidably coupled to the support body 11.

As can be seen in figures 3 and 4, the translator 10 is slidably mobile along a translation axis Z which is parallel to and preferably distanced from the tilting axis B. In other words, the translator 10 is mobile along a direction which is perpendicular to a direction in which the arm 7 moves during rotation thereof about the tilting axis B. In this way the translator can interfere with the arm 7 and block rotation thereof on reaching the engagement position.

The translation axis Z of the translator 10 and the tilting axis B are preferably parallel to one another and staggered along the longitudinal axis Y of the conduit 3. Even more preferably, the translation axis Z of the translator 10, the tilting axis B and the longitudinal axis Y of the conduit 3 lie in a single plane.

The support body 11 comprises two end-run buffers 12 which are opposite one another and which define the striker elements for a portion of the arm 7 in order to limit the extent of rotation thereof. In particular, when the arm 7 is striking against one or the other of the end-run buffers 12, the obturator 4 is respectively in the open position and in the closed position. The end-run buffers 12 thus respectively determine a first and a second extreme position of the arm 7, corresponding to the open and closed positions of the obturator 4.

The translation axis Z of the translator 10 is positioned across the two end-run buffers 12. Further, the engagement portion 10a is of such a size as to keep the arm 7 blocked striking against one or the other of the end-run buffers 12 and, thus, keep the obturator 4 blocked in the corresponding open or closed position. Figure 4 illustrates a configuration in which the obturator 4 is kept blocked in the open position, while figure 3 shows a configuration in which the translator 10 is disengaged from the arm 7 and thus enables the arm 7 to rotate about the tilting axis B.

In the illustrated embodiment of the valve 1, the end-run buffers 12 and the translator 10 act on an opposite end of the arm 7 to the counter-weight 8. In other words, the tilting axis B is comprised between the counterweight 8 and the end of the arm 7 interacting with the end-run buffers 12 and the translator 10.

In use, the above-described valve 1 is fixed to the central tubular portion 203 of the rotatable support 202 as previously described. In particular, the valve 1 is mounted on the rotatable support 202 such that the longitudinal axis Y of the conduit 3 is parallel to the hinge axis X of the rotatable support 202. The longitudinal axis Y of the conduit 3 coincides with the hinge axis X of the rotatable support.

In this configuration, illustrated in figure 2, a rotation of the central tubular portion 203 about the hinge axis X determines a rotation of the whole valve 1 about the longitudinal axis Y.

The rotation causes the valve 1 to strike different positions with respect to the longitudinal axis Y and this means that both the arm 7 and the translator 10 are subjected to forces having variable directions according to the angular position assumed by the valve 1 about the longitudinal axis Y.

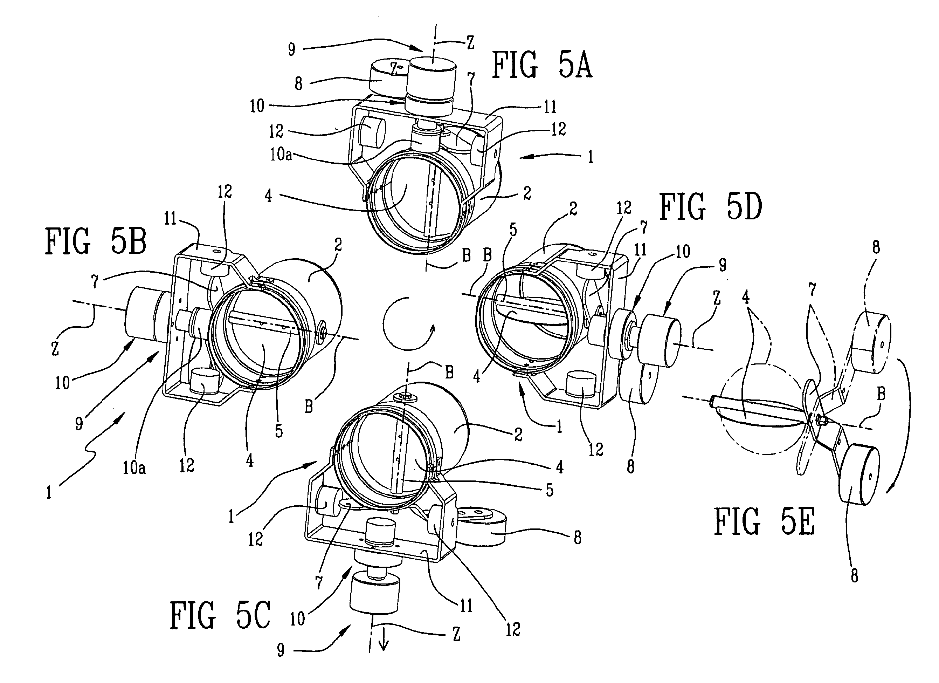

The sequence illustrated in figures 5A-5E is a step-by-step succession of configurations assumed by the valve 1 following an anticlockwise rotation about the hinge axis X, starting from an initial position illustrated in figure 5A. In this initial configuration, the obturator is in the closed position while the translator 10 is in the engagement position under the action of its weight force. This configuration relates, for example, to a moment that immediately precedes the unwinding of the flexible tube 300 from the rotatable support 202, in which the aspiration in the flexible tube 300 is interrupted.

Figure 5B illustrates the position reached by the valve of figure 5A after a clockwise rotation, in the direction of the arrow, of 90 degrees. In figure 5B the counterweight 8 tends to maintain the arm 7 in the same position corresponding to the closure of the obturator 4, while the translator 10 is directed horizontally, remaining in the same position.

Figure 5C illustrates the same valve after a further 90° anticlockwise rotation; in particular it is noticeable that the translator 10, which is in the tilted position with respect to the initial configuration, reaches the disengaged and free position thereof on rotation of the arm 7. However, the arm 7 lies on a horizontal plane and thus does not tend to rotate about the tilting axis B, and thus maintains the obturator 4 in the closed position.

A subsequent anticlockwise 90° rotation causes the arm 7 to rotate about the tilting axis B, bringing the obturator 4 into the open position, as shown in figure 5D. In this position, the translation axis Z is horizontal and thus the translator 10 tends not to return into the engagement position. Figure 5E shows in detail the extreme positions reached by the arm 7, the pivot 5 and the obturator 4 (the final position is shown in a continuous line, the preceding position in a broken line).

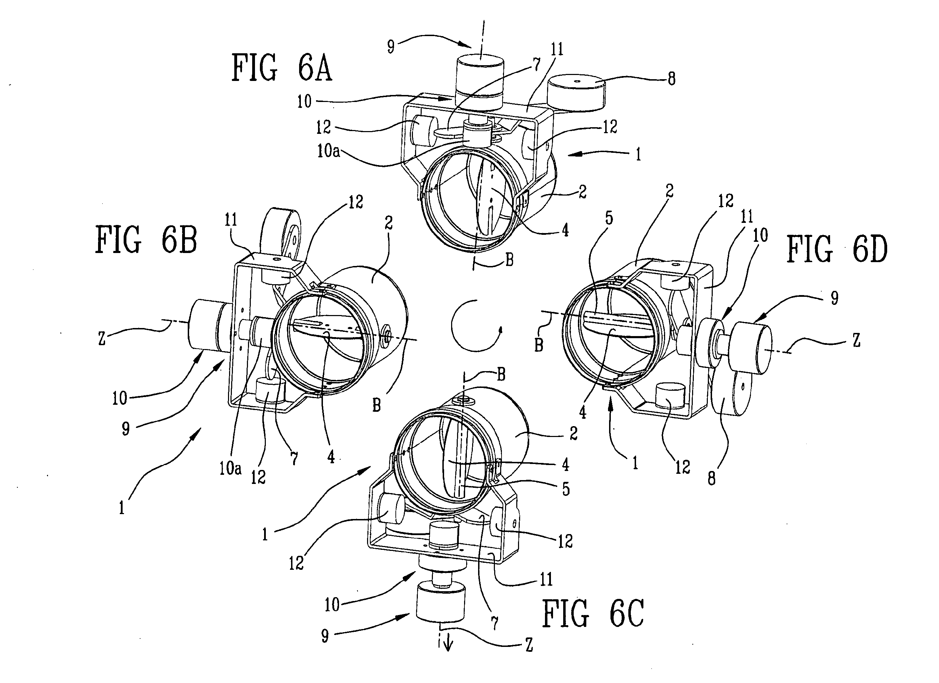

The sequence illustrated in figures 6A-6E shows a step-by-step view of the configurations assumed by the valve 1 following a further rotation in an anticlockwise direction about the hinge axis X, starting from the open position of the obturator 4 shown in figure 6A. Note that the position of figure 6A is obtained by the 90° anticlockwise rotation starting from the position of figure 5D.

In figure 6A, the translator 10 is in the engagement position and blocks the arm 7 in a position corresponding to the open position of the obturator 4. By repeating the analyses and the considerations already seen for the sequence of figures 5A-5D, note that in the 6A-6D sequence, even following an anticlockwise rotation, closure of the obturator 4 is never achieved. In particular, figure 6B shows how the tilting action caused by the counter-weight 8, which tends to rotate the arm 7 and therefore to close the obturator 4, is effectively contrasted by the translator 10 which remains in the engagement position, the translator 10 being oriented horizontally and therefore not being subject to any translation due to the weight force thereof.

This gives the precious advantage of being able to obtain automatic opening of the obturator 4 even after a small unwinding of the flexible tube 300 from the rotatable support 202, and of being able to exploit a continuous aspiration even following further successive unwinding of the flexible tube 300 which causes consistent rotations of the rotatable support 202. Even when continuing to unroll the flexible tube 300 after the obturator 4 has opened, the obturator 4 no longer returns into the closed position.

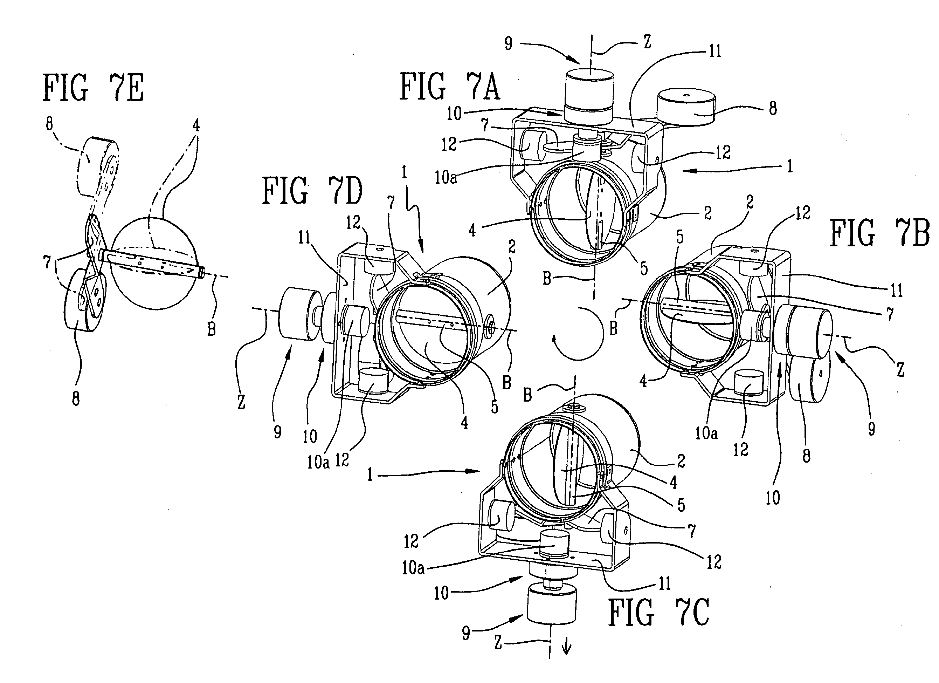

The sequence illustrated in figures 7A-7E refers to a step-by-step succession of configurations assumed by the valve 1 following a clockwise rotation about the hinge axis X, starting from an open configuration of the obturator 4, for example when it is necessary to replace the tube 300 by winding it back up on the rotatable support 202.

Starting from the configuration of figure 7A, following a 90° clockwise rotation of the valve 1, no change in the position of the arm 7 and the translator 10 is obtained (figure 7B). A further 90° clockwise rotation brings the translator 10, following only the action of its own weight force, into the disengagement position (figure 7C) which enables, following a further 90° clockwise rotation, the rotation of the arm 7 about the tilting axis B, bringing the obturator 4 into the closed position thereof (figure 7D). Figure 7E illustrates, in a broken line, the position of the arm 7 before the rotation, and in a continuous line, the final position following the rotation, caused by the tilting action impressed by the counter-weight 8.

Thus, by rewinding the flexible tube 300 on the rotatable support 202, it is possible to obtain automatic closure of the obturator 4 with interruption of the aspirating action of the flexible tube 300.

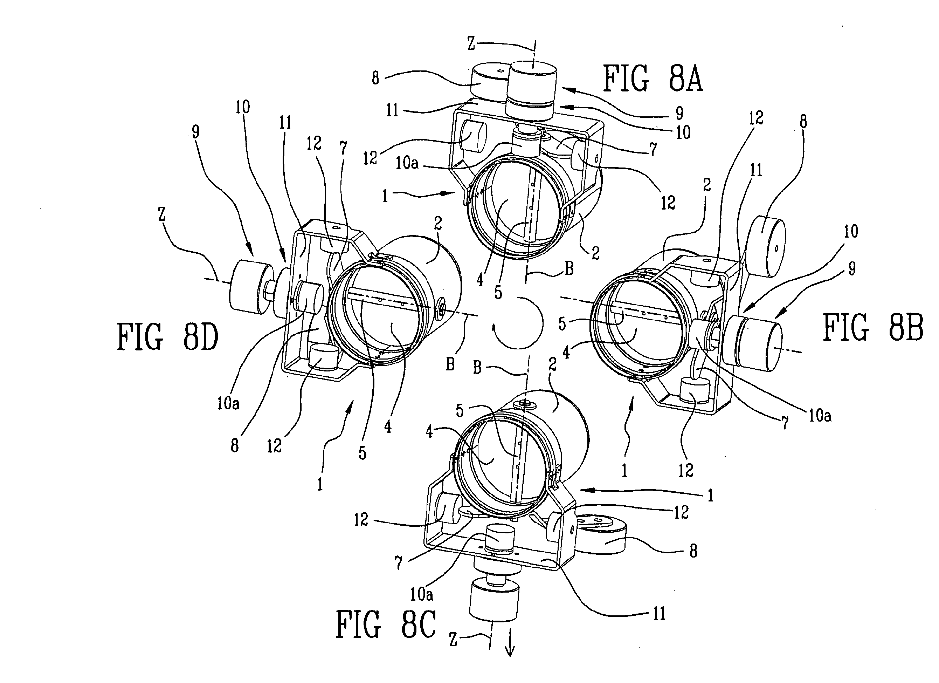

A subsequent rotation by 90°, which would lead to the configuration of figure 8A and thereafter to the successive configurations of the sequence 8A-8D, demonstrate that even by continuing to rewind the flexible tube 300 on the rotatable support 202 the obturator would remain in its closed position even following numerous rotations of the rotatable support 202. In particular, figure 8B shows how the tilting action given by the counter-weight 8, which would tend to rotate the arm 7 and thus open the obturator 4, is effectively contrasted by the translator 10 which remains in the engagement position, the translator 10 being oriented horizontally and thus not being subject to any translation due to the weight force thereof.

From the analysis of the cited sequences, it can be seen how the presence of the translator 10 influences the movement of the arm 7 and in particular conditions the switching between the two extreme positions up until rotation about the tilting axis B is blocked even if the flexible tube 300 is further unwound or rewound.

This allows an operator to be able to work simply, by pulling the flexible tube 300 and unwinding it from the rotatable support 202, as the aspiration is automatically opened and is, above all, kept constant over time up to the moment in which the flexible tube 300 is rewound on the rotatable support 202. In this case, the aspiration of the flexible tube 300 is interrupted independently of the angular position assumed by the rotatable support 202 once winding is complete.

In embodiments of the invention which are not illustrated herein, the translator 10 can be replaced by any other organ having a mobile portion respecting the movement modes of the translator. In particular a solution can be provided in which the translator 10 is replaced by a cam follower having an active end which tends to raise or lower itself according to the angular position assumed by the valve 1.

Further, the movement of the arm and the means for retaining is advantageously automatically produced by force of gravity, following the rotation of the conduit about the hinge axis, without the use of an external motor.

## Claims

1. A valve, comprising:
a hollow body (2) having an inlet, an outlet and a conduit (3) connecting the inlet with the outlet, the conduit (3) developing along a longitudinal axis (Y) thereof extending between the inlet and the outlet;
an obturator (4), interposed in the conduit (3) and rotatable about a tilting axis (B), rotating between a closed position, in which it obstructs the conduit (3), and an open position in which it allows passage of a fluid through the conduit (3);
a command organ (6), rigidly connected to the obturator (4) and rotatably together with the obturator (4) about the tilting axis (B), the command organ (6) having a mass distribution which is eccentric with respect to the tilting axis (B) in order to rotate automatically by force of gravity following a rotation of the hollow body (2) about the longitudinal axis (Y);
**characterised in that** it comprises means for retaining (9), freely mobile by force of gravity to near and distance from the conduit (3) between an engagement position, in which the means for retaining (9) intercept a portion of the command organ (6) preventing a rotation of the command organ (6) about the tilting axis (B), and a disengagement position, in which the means for retaining (9) enable the command organ (6) to rotate about the tilting axis (B).

2. The valve of claim 1, **characterised in that** the means for retaining assume the positions of engagement and disengagement according to an angular position assumed by the hollow body about the longitudinal axis.

3. The valve of claim 1 or 2, **characterised in that** the means for retaining (9) are mobile transversally to a trajectory of the portion of the command organ (6).

4. The valve of one of the preceding claims, **characterised in that** the means for retaining (9) are mobile along an axis (Z) which is fixed with respect to the hollow body (2) and parallel to the tilting axis (B).

5. The valve of one of the preceding claims, **characterised in that** the command organ (6) comprises an arm (7) which is rotatable about the tilting axis (B) and mobile between a first position in which an end of the arm (7) strikes on a first end-run buffer (12), and a second position, rotated with respect to the first position, in which the end of the arm (7) strikes against a second end-run buffer (12), the first position corresponding to the open position of the obturator (4), the second position corresponding to the closed position of the obturator (4).

6. The valve of one of the preceding claims, **characterised in that** the means for retaining (9) comprise a support body (11) fixed externally of the hollow body (2) and a translator (10) slidably mounted on the support body (11) for freely translating, in a nearing and a distancing direction with respect to the hollow body (2) along a translation axis (Z).

7. The valve of claim 6, **characterised in that** the longitudinal axis (Y) of the conduit (3), the tilting axis (B) and the translation axis (Z) lie on a same common plane.

8. The valve of one of the preceding claims, **characterised in that** the command organ (6) and the means for retaining (9) are positioned externally of the conduit (3).

9. The valve of claim 5, **characterised in that** it comprises a pivot (5) which is rigidly connected to the obturator (4) and which develops along the tilting axis (B), the pivot partially emerging from the hollow body (2) in order to connect to the command organ (6).

10. An aspiration device, comprising a valve (1) according to one of the preceding claims.

11. The device of claim 10, **characterised in that** it comprises a rotatable support (202) which is rotatable about a hinge axis (X) and on which a flexible tube (300) is wound, the valve (1) being fixed to the rotatable support (202) such as to be drawn in rotation about the hinge axis (X).

12. The device of claim 11, **characterised in that** the valve (1) is fixed on the rotatable support (202) such that the longitudinal axis (Y) of the conduit (3) coincides with the hinge axis (X).

13. The device of claim 11 or 12, **characterised in that** the rotatable support (202) internally exhibits a chamber (207) in which the valve (1) is housed.

14. The device of one of the claims 11 to 13, **characterised in that** the hinge axis (X) is horizontal.

## Patentansprüche

1. Ventil, enthaltend:
- einen Hohlkörper (2) mit einem Einlass, einem Auslass und einer den Einlass mit dem Auslass verbindenden Leitung (3), wobei die Leitung (3) entlang einer Längsachse (Y) desselben verläuft und sich zwischen dem Einlass und dem Auslass erstreckt;
- ein Absperrelement (4), eingesetzt in die Leitung (3) und drehbar um eine Kippachse (B), wobei es sich dreht zwischen einer geschlossenen Position, in welcher es die Leitung (3) absperrt, und einer geöffneten Position, in welcher es den Durchlauf einer Flüssigkeit durch die Leitung (3) erlaubt;
- ein Betätigungsorgan (6), starr angeschlossen an das Absperrelement (4) und drehbar zusammen mit dem Absperrelement (4) um die Kippachse (B), wobei das Betätigungsorgan (6) eine Massenverteilung hat, welche im Verhältnis zu der Kippachse (B) exzentrisch ist, um sich einer Umdrehung des Hohlkörpers (2) um die Längsachse (Y) folgend automatisch durch Schwerkraft zu drehen; **dadurch gekennzeichnet, dass** es Rückhaltmittel (9) enthält, frei beweglich durch Schwerkraft zum Annähern und Entfernen von der Leitung (3) zwischen einer Eingriffsposition, in welcher die Rückhaltmittel (9) einen Abschnitt des Betätigungsorgans (6) abfangen und dabei eine Umdrehung des Betätigungsorgans (6) um die Kippachse (B) verhindern, und einer Freigabeposition, in welcher die Rückhaltmittel (9) das Betätigungsorgan (9) befähigen, sich um die Kippachse (B) zu drehen.

2. Ventil nach Patentanspruch 1, **dadurch gekennzeichnet, dass** die Rückhaltmittel die Eingriffs- und Freigabepositionen je nach einer Winkelposition einnehmen, die durch den Hohlkörper um die Längsachse eingenommen ist.

3. Ventil nach Patentanspruch 1 oder 2, **dadurch gekennzeichnet, dass** die Rückhaltmittel (9) quer zu einer Bahn des Abschnittes des Betätigungsorgans (6) beweglich sind.

4. Ventil nach einem der vorstehenden Patentansprüche, **dadurch gekennzeichnet, dass** die Rückhaltmittel (9) beweglich sind entlang einer Achse (Z), welche feststehend ist im Verhältnis zu dem Hohlkörper (2) und parallel zu der Kippachse (B) verläuft.

5. Ventil nach einem der vorstehenden Patentansprüche, **dadurch gekennzeichnet, dass** das Betätigungsorgan (6) einen Arm (7) enthält, welcher um die Kippachse (B) drehbar und beweglich ist zwischen einer ersten Position, in welcher ein Ende des Armes (7) gegen einen ersten Endanschlagpuffer (12) anschlägt, und einer zweiten Position, gedreht im Verhältnis zu der ersten Position, in welcher das Ende des Armes (7) gegen einen zweiten Endanschlagpuffer (12) anschlägt, wobei die erste Position der geöffneten Position des Absperrelementes (4) und die zweite Position der geschlossenen Position des Absperrelementes (4) entspricht.

6. Ventil nach einem der vorstehenden Patentansprüche, **dadurch gekennzeichnet, dass** die Rückhaltmittel (9) einen Trägerkörper (11) enthalten, befestigt ausserhalb des Hohlkörpers (2), und einen Schieber (10), gleitbar montiert an dem Trägerkörper (11), um frei in einer Annäherungs- und einer Entfernungsrichtung im Verhältnis zu dem Hohlkörper (2) entlang einer Verschiebeachse (Z) bewegt zu werden.

7. Ventil nach Patentanspruch 6, **dadurch gekennzeichnet, dass** die Längsachse (Y), die Kippachse (B) und die Verschiebeachse (Z) auf einer gemeinsamen Ebene liegen.

8. Ventil nach einem der vorstehenden Patentansprüche, **dadurch gekennzeichnet, dass** das Betätigungsorgan (6) und die Rückhaltmittel (9) ausserhalb der Leitung (3) positioniert sind.

9. Ventil nach Patentanspruch 5, **dadurch gekennzeichnet, dass** es einen Zapfen (5) enthält, welcher starr an das Absperrelement (4) angeschlossen ist, und welcher entlang der Kippachse (B) verläuft, wobei der Zapfen (5) teilweise aus dem Hohlkörper (2) herausragt, um sich mit dem Betätigungsorgan (6) zu verbinden.

10. Absaugvorrichtung, enthaltend ein Ventil nach einem der vorstehenden Patentansprüche.

11. Vorrichtung nach Patentanspruch 10, **dadurch gekennzeichnet, dass** sie eine drehbare Halterung (202) enthält, welche um eine Scharnierachse (X) drehbar ist, und auf welche ein flexibles Rohr (300) gewickelt ist, wobei das Ventil (1) so an der drehbaren Halterung (202) befestigt ist, dass es um die Scharnierachse (X) in Umdrehung gezogen wird.

12. Vorrichtung nach Patentanspruch 11, **dadurch gekennzeichnet, dass** das Ventil (1) an der drehbaren Halterung (202) auf solche Weise befestigt ist, dass die Längsachse (Y) der Leitung (3) mit der Scharnierachse (X) übereinstimmt.

13. Vorrichtung nach Patentanspruch 11 oder 12, **dadurch gekennzeichnet, dass** die drehbare Halterung (202) im Inneren eine Kammer (207) aufweist, in welche das Ventil (1) eingesetzt ist.

14. Vorrichtung nach einem der Patentansprüche von 11 bis 13, **dadurch gekennzeichnet, dass** die Scharnierachse (X) horizontal verläuft.

## Revendications

1. Vanne comprenant:
- un corps creux (2) pourvu d'une entrée, une sortie et un conduit (3) reliant l'entrée à la sortie, le conduit (3) se développant le long de son axe longitudinal (Y) s'étendant entre l'entrée et la sortie;
- un obturateur (4), interposé dans le conduit (3) et pivotant autour d'un axe de basculement (B), entre une position fermée, dans laquelle il obstrue le conduit (3), et une position ouverte, dans laquelle il permet le passage d'un fluide au travers du conduit (3);
- un organe de commande (6), rigidement connecté à l'obturateur (4) et pivotant avec ce dernier autour de l'axe de basculement (B), l'organe de commande (6) ayant une distribution de masse excentrique par rapport à l'axe de basculement (B) de manière à pivoter automatiquement par force de gravité en suivant une rotation du corps creux (2) autour de l'axe longitudinal (Y);
**caractérisé en ce qu'**il comprend des moyens de retenue (9), mobiles librement par force de gravité en rapprochement et éloignement par rapport au conduit (3) entre une position d'engagement, dans laquelle les moyens de retenue (9) interceptent une portion de l'organe de commande (6) en prévenant une rotation de l'organe de commande (6) autour de l'axe de basculement (B), et une position de désengagement, dans laquelle les moyens de retenue (9) permettent à l'organe de commande (6) de pivoter autour de l'axe de basculement (B).

2. Vanne selon la revendication 1, **caractérisée en ce que** les moyens de retenue assument les positions d'engagement et de désengagement selon une position angulaire assumée par le corps creux autour de l'axe longitudinal.

3. Vanne selon la revendication 1 ou 2, **caractérisée en ce que** les moyens de retenue (9) sont mobiles transversalement à une trajectoire de la portion de l'organe de commande (6).

4. Vanne selon l'une quelconque des revendications précédentes, **caractérisée en ce que** les moyens de retenue (9) sont mobiles le long d'un axe (Z) fixe par rapport au corps creux (2) et parallèle à l'axe de basculement (B).

5. Vanne selon l'une quelconque des revendications précédentes, **caractérisé en ce que** l'organe de commande (6) comprend un bras (7) pivotant autour de l'axe de basculement (B) et mobile entre une première position, dans laquelle une extrémité du bras (7) bute sur un premier tampon de fin de course (12), et une seconde position, pivotée par rapport à la première, dans laquelle l'extrémité du bras (7) bute contre un second tampon de fin de course (12), la première position correspondant à la position ouverte de l'obturateur (4), la seconde position correspondant à la position fermée de l'obturateur (4).

6. Vanne selon l'une quelconque des revendications précédentes, **caractérisée en ce que** les moyens de retenue (9) comprennent un corps de support (11) fixe extérieurement au corps creux (2) et un translateur (10) monté de manière coulissante sur le corps de support (11) pour translater librement, dans une direction de rapprochement ou d'éloignement par rapport au corps creux (2) le long d'un axe de translation (Z).

7. Vanne selon la revendication 6, **caractérisée en ce que** l'axe longitudinal (Y) du conduit (3), l'axe de basculement (B) et l'axe de translation (Z) sont compris dans un même plan commun.

8. Vanne selon l'une quelconque des revendications précédentes, **caractérisée en ce que** l'organe de commande (6) et les moyens de retenue (9) sont positionnés extérieurement au conduit (3).

9. Vanne selon la revendication 5, **caractérisée en ce qu'**elle comprend un pivot (5) rigidement connecté à l'obturateur (4) et qui se développe le long de l'axe de basculement (B), le pivot émergeant partiellement du corps creux (2) de manière à connecter l'organe de commande (6).

10. Dispositif d'aspiration, comprenant une valve (1) selon l'une quelconque des revendications précédentes.

11. Dispositif selon la revendication 10, **caractérisé en ce qu'**il comprend un support rotatif (202) pivotant autour d'un axe de rotation (X) et sur lequel est enroulé un tube flexible (300), la vanne (1) étant fixée sur le support rotatif (202) de manière à être entraînée en rotation autour de l'axe de rotation (X).

12. Dispositif selon la revendication 11, **caractérisé en ce que** la vanne (1) est fixée sur le support rotatif (202) de manière à ce que l'axe longitudinal (Y) du conduit (3) coïncide avec l'axe de rotation (X).

13. Dispositif selon la revendication 11 ou 12, **caractérisé en ce que** le support rotatif (202) présente intérieurement une chambre (207) dans laquelle la vanne (1) est logée.

14. Dispositif selon l'une des revendications 11 à 13, **caractérisé en ce que** l'axe de rotation (X) est horizontal.
